# EUROPEAN PATENT APPLICATION

(11) **EP 1 510 990 A2**
(43) Date of publication of application: **02.03.2005**
(21) Application number: 04251496.8
(22) Date of filing: 16.03.2004
(51) Int. Cl.: G09B 5/00, G09B 7/00

(54) **Distance education system**

(30) Priority: 17.03.2003 JP 2003072082
(71) Applicant: SAGA UNIVERSITY, Saga-City Saga Pref. (JP)
(72) Inventor: Hoyashita, Shigeru, Saga-City Saga Pref. (JP); Ikegami, Yasuyuki, Saga City Saga Pref. (JP); Sumi, Kazuhiro, Saga City Saga Pref. (JP)
(74) Representative: Paget, Hugh Charles Edward

(57) **Abstract**

A distance education system for providing an educational service to a user via a network is provided, the system includes: education providing part for providing the educational service utilizing at least one educational material to the user via the network, wherein the educational material includes a plurality of elements; test transmission part for transmitting a test to the user by each predetermined stage and for prompting the user to send an answer to the test, wherein the test is associated with the educational material; evaluation part for receiving the answer from the user via the network to evaluate it; and evaluation transmission means for transmitting the evaluation result by the evaluation part to the user.

## Description

### Background of the Invention

### Field of the Invention

The present invention relates to a distance education system, particular to a distance education system for evaluating users i.e., students who are taking a lecture by each predetermined stage and for dynamically changing the educational material based upon the evaluation.

### Related Art Statements

Information technologies have been developed in recent years and distance education systems (i.e., e-learning system) utilizing the such technologies for providing an educational material including various elements as an educational service via a network have been developed and been in practical use.
Although there are various conventional distance education systems for providing lectures to general public users using IT and some of them are systems for providing network lectures using a broadcasting satellite, such network lectures provide only uniform educational services and are one-sided approaches. In other words, the conventional systems cannot provide customized educational services. In addition, it is difficult to timely figure out status of students (e.g., intelligibilities or performances) for the conventional systems.
There are various conventional educational systems, for example some of which are disclosed in documents (a document 1: Japanese Patent Laid Open No. 2001-192068, a document 2: Japanese Patent Laid Open No. 2003-021999, and a document 3: Japanese Patent Laid Open No. 2003-228272).

The educational system of the document 1 is a system for searching/distributing/utilizing completed educational materials. Although this conventional educational system can provide an educational material based upon user preferences, the system cannot provide educational services with properly evaluating respective users.
In addition the educational system of the document 2 is a system for providing educational materials, which are customized, based upon individual ability or individual environment. Although this conventional educational system can 'statically' provide educational services based upon abilities of a user before taking lectures, the system cannot provide educational services by providing educational materials which are 'dynamically' changed based upon the evaluating each user while they are leaning with the educational materials.

Additionally the educational system of the document 3 is a system for evaluating user attitudes while he/she is taking lecture which are provided by e-learning systems. Although this conventional system can evaluate attitudes of users while each user takes lectures and can evaluate how much they have achieved about the educational materials, the system cannot evaluate each user while they are learning by respective predetermined stages and cannot provide results of the evaluation to each user. In addition, this conventional educational system cannot evaluate each learner while he or she is taking a class, and cannot 'dynamically' change the educational material based upon the evaluation and cannot provide educational services using the changed material. Namely the conventional educational systems cannot provide educational services with changing the educational materials in response to understandings, intelligibilities or achievements of each learner.

### SUMMARY OF THE INVENTION

In order to solve the above-mentioned problems, it is an object of the present invention to provide a distance education system or distance learning system capable of providing educational services with 'dynamically' changing educational materials as evaluating intelligibilities of respective users while they are learning. It is another object of the present invention to provide a distance learning system capable of efficiently providing supports by respective educational support persons to respective learners.

According to the present invention, there is provided a distance education system for providing an educational service to a user via a network, the system is comprises:
ID receiving means for receiving an ID and a password from the user via the network;
authentication means for authenticating the user based on both the ID and the password with reference to an authentication database;
education providing means for providing the educational service utilizing at least one educational material to the user via the network, wherein the educational material includes a plurality of elements;
test transmission means for transmitting a test to the user by each predetermined stage and for prompting the user to send an answer to the test, wherein said test is associated with said educational material;
evaluation means for receiving the answer from the user via the network to evaluate it; and
evaluation transmission means for transmitting the evaluation result by the evaluation means to the user.
According to the present invention, the present system instructs a user who are learning to answer a test by each predetermined stage to submit the answer and rapidly presents the evaluation result to each user, thereby each user can simply and easily understand his/her learning intelligibilities or learning achievements based on the received evaluation result in respective learning stages.

In an embodiment of the system according to the present invention, the system comprises:
education providing means for providing the educational service utilizing at least one educational material to the user via the network, wherein the educational material includes a plurality of elements which are read out from a storage such as a educational material database;
test transmission means for transmitting a test to the user by each predetermined stage and for prompting the user to send an answer to the test, wherein said test is associated with said educational material;
evaluation means for receiving the answer from the user via the network to evaluate it;
educational material optimizing means for selecting at least one element from an educational material database based upon the evaluation result by the evaluation means with reference to predetermined selection criteria;
educational material dynamic changing means for dynamically changing a part of said educational material using said selected at least one element, wherein the part corresponds to the selected element and is not yet finished/taken by the user; and
evaluation transmission means for transmitting the evaluation result by the evaluation means to the user.
Alternatively, in another embodiment of the system according to the present invention the present distance education system comprises:
education providing means for providing the educational service utilizing at least one educational material to the user via the network, wherein the educational material includes a plurality of elements;
test transmission means for transmitting a test to the user by each predetermined stage and for prompting the user to send an answer to the test, wherein said test is associated with said educational material;
evaluation means for receiving the answer from the user via the network to evaluate it;
educational material optimizing means for selecting at least one element from a educational material database based upon the evaluation result by the evaluation means with reference to predetermined selection criteria; and
educational material dynamic changing means for transmitting said selected at least one element to the user via the network and for prompting a user device (e.g., a PC, a terminal, or a PDA) to dynamically replace a part of the educational material by the selected element, wherein the part corresponds to the selected element and is not yet finished/taken by the user.
In the conventional distance education system such as a network lecture providing system, if once a lecture has stared, a content of the educational material is fixed and a user can obtain only a uniform educational service. However, according to the present invention, the content (elements) of the educational material may dynamically be changed to be more adapted to the each user who is learning with the material. Since the educational material is allowed to dynamically be changed to more suitable one for each user, it is possible to improve learning efficiency or comprehension of each user.

In still another embodiment of the system according to the present invention, said system further comprises means for transmitting a pre-test prior to transmitting the educational material and for prompting the user to send an answer to the pre-test,
wherein said evaluation means further receives the answer to the pre-test to evaluate it,
and wherein said educational material optimizing means selects the educational material including a plurality of elements from the pre-established educational material database based upon the evaluation result of the pre-test with reference to said predetermined selection criteria.
According to the present invention, more suitable educational material for each user can be provided from the beginning based upon evaluating result of the answer to the advance test from each user.

In still another embodiment of the system according to the present invention, said optimizing means selects the educational material from the pre-established educational material database based upon at least one of: the evaluation result of the answer to the pre-test; a request of the user; a history of taking lectures of the user; and past evaluation result of the user.
According to the present invention, more suitable educational material for each user can be provided from the beginning based upon these pieces of information.

In still another embodiment of the system according to the present invention, said system further comprises:
an educational support member database in which educational support members, specializations areas of respective educational support members, and contact addresses of respective educational support members are recoded therein;
support member selection means for receiving support request form the user via the network and for selecting at least one educational support member who has a specialization field coinciding with a specialization fields of said support request received from the user via the network or a specialization field in which the educational service is provided to the user educational support member database; and
connection agent means for mediating a connection between said contact address of the selected educational support member and said user via the network and for communicating at least one piece of information from audio information, image information, and text information between the selected educational support member and the user.
According to the present invention, each user can receives appropriate educational teaching as needed, it is possible to improve learning efficiency or comprehension of each user.

In still another embodiment of the system according to the present invention, said system further comprises:
an educational support member database, in which educational support members, specializations areas of the respective educational support members, and contact addresses of the respective educational support members are recoded therein;
support member selection means for receiving support request form the user via the network and for selecting at least one educational support member who has a specialization field coinciding with a specialization fields of said support request received from the user via the network or a specialization field in which the educational service is provided to the user from said educational support member database;
support request transmission means for transmitting said support request to the contact address of the selected educational support member via the network and for prompting the educational support member to reply it; and
user support means for receiving the reply of the support request from the selected educational support member via the network and for forwarding it to the corresponding user via the network.
According to the present invention, each user can receives adequate educational teaching as needed, it is possible to improve learning efficiency or comprehension of each user.

In still another embodiment of the system according to the present invention, said system further comprises register means for registering status of the educational support members, in which each support member is whether or not readily respond to the support request, to the educational support member database,
and wherein said support selection means, when an educational support member is to be selected, for preferentially selecting the educational support member who has a status in which a member can readily respond.
Alternatively said system further comprises register means for registering schedules of the respective educational support members, each schedule indicates time schedule for which each support member can respond the support request.
According to the present invention, each user can receives proper educational teaching as needed, it is possible to improve learning efficiency or comprehension of each user.

By way of easy explanation the aspect of the present invention has been described as the systems i.e., device, however it is understood that the present invention may be realized as methods corresponding to the systems, programs embodying the methods as well as a storage media storing the programs therein.
For example, according to another aspect of the present invention, there is provided a distance education method for providing an educational service to a user via a network, the method comprises the steps of:
providing the educational service utilizing at least one educational material to the user via the network, wherein the educational material includes a plurality of elements;
transmitting a test to the user by each predetermined stage and for prompting the user to send an answer to the test, wherein said test is associated with said educational material;
receiving the answer from the user via the network to evaluate it;
transmitting the evaluation result by the evaluation step to the user;
selecting at least one element from a educational material database based upon the evaluation result by the evaluation step with reference to predetermined selection criteria; and
dynamically changing a part of said educational material using said selected at least one element, wherein the part corresponds to the selected element and is not yet finished/taken by the user.

### BRIEF DESCRIPTION OF THE DRAWINGS

Exemplary embodiments of the present invention will now be described in detail with reference to the accompanying drawings in which:
Fig. 1 is a diagram illustrating a concept of a general learning process in a conventional network lecture (distance education system);
Fig. 2 is a diagram showing a concept of one lesson within a general learning process in a conventional network lecture (distance education system);
Fig. 3 is a block diagram representing an exemplary basic arrangement of a distance education system according to the present invention;
Fig. 4 is a concept diagram depicting a learning process provided by a distance education system according to the present invention;
Fig. 5 is a concept diagram illustrating a learning process provided by an embodiment of the distance education system according to the present invention;
Fig. 6 is a concept diagram showing a learning process provided by another embodiment of the distance education system according to the present invention;
Fig. 7 is a concept diagram representing a learning process provided by still another embodiment of the distance education system according to the present invention;
Fig. 8 is an exemplary screen interface for displaying information to a user provided by the distance education system according to the present invention; and
Fig. 9 is another exemplary screen interface for displaying information to a user provided by the distance education system according to the present invention.

### DETAILED DESCRIPTION OF THE PREFERRED EMBODIMENTS

Several preferred exemplary embodiments and principles of the present invention will be described with reference to the accompanying drawings.

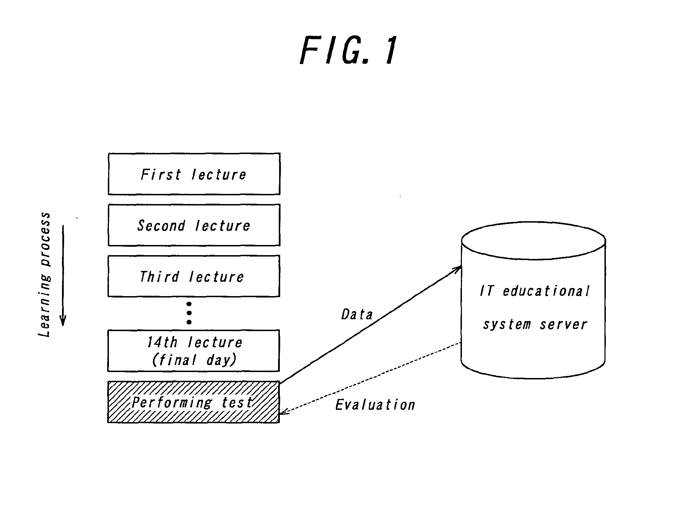

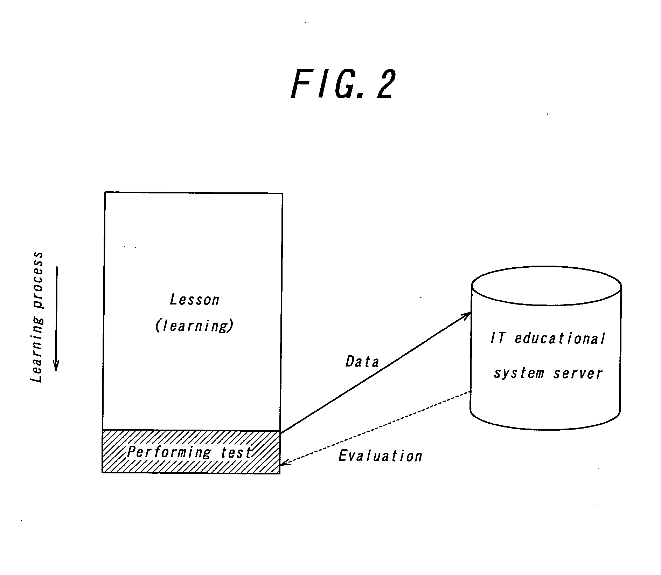

Fig. 1 is a diagram illustrating a concept of a general learning process in a conventional network lecture (distance education system) and Fig. 2 is a diagram showing a concept of one lesson within a general learning process in a conventional network lecture (distance education system). As shown in figs, in a conventional network lecture, if once an educational material for a certain subject is selected in an educational system server by a user, the system carries on lectures with the selected educational material to the last. Almost conventional systems provide a test or a writing assignment to a user and receive a reply to the test or a report from user to evaluate it at the end. Accordingly, even if the selected educational material does not adapt to the user, the educational material i.e., the educational service may not be changed in mid-course.

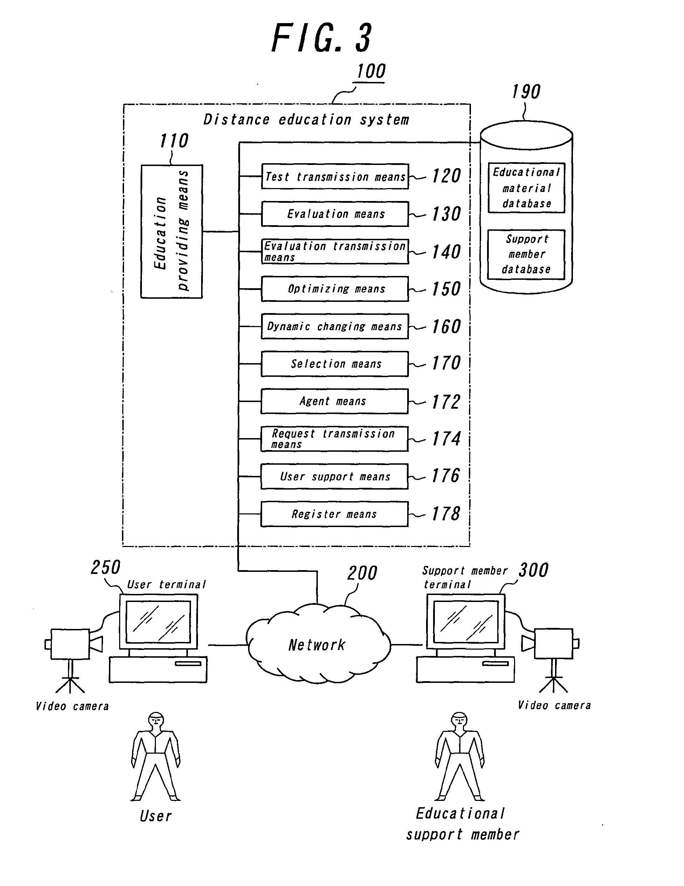

Fig. 3 is a block diagram representing an exemplary basic arrangement of a distance education system according to the present invention. As shown in Fig. 3, the distance education system 100 provides educational services to each user using a user terminal 250 via a network 200 (such as a public telecommunication network, the Internet, a cable TV network, or a wireless network). The distance education system 100 includes: an education providing means 110 for providing the educational service utilizing at least one educational material to the user via the network, wherein the educational material includes a plurality of elements; a test transmission means 120 for transmitting a test to the user by each predetermined stage and for prompting the user to send an answer to the test, wherein said test is associated with said educational material; an evaluation means 130 for receiving the answer from the user via the network to evaluate it; an evaluation transmission means 140 for transmitting the evaluation result by the evaluation means 130 to the user; an educational material optimizing means 150 for selecting at least one element from a educational material database based upon the evaluation result by the evaluation means 130 with reference to predetermined selection criteria; an educational material dynamic changing means 160 for dynamically changing a part of said educational material using said selected at least one element, wherein the part corresponds to the selected element and is not yet completed by the user; a support member selection means 170 for selecting at least one educational support member from an educational support member database 190; a connection agent means 172 for mediating a connection between a contact address of the selected educational support member and said user via the network; a support request transmission means 174 for transmitting said support request to the selected educational support member (i.e., the contact address) via the network and for prompting the educational support member to reply it; a user support means 176 for receiving the reply of the support request from the selected educational support member via the network and for forwarding it to the corresponding user via the network; and a register means 178 for registering status of the educational support members, in which each support member is whether or not readily respond to the support request, to the educational support member database.

The user terminal (e.g., a PC) 250 or support member terminal (e.g., a PC) 300 comprises a display means, a character input means (e.g., a keyboard or a pointing device), image capturing means (e.g., a video camera), and an audio input/output means (such as a microphone and a speaker) and the user and the support staff can communicate each other using the described means as needed via the network. The user terminal 250 further comprises a function for providing educational services to the user by displaying the educational material received from the present system, a function for presenting a received test to the user to prompt the user to answer to the test and for sending the answer to the system, a function for displaying an evaluation result received from the present system, and a function for accepting a support request including, for example, a query from the user and for sending it the present system. The educational support member database has been pre-established to be used this system and this database has stored educational support member names, fields of expertise (such as educational material levels or subject levels for which experts can support), contact addresses (e.g., IP addresses, telephone numbers, and any kinds of network addresses, or the like), which are associated each other, as following table. The present system makes reference to this database to assign the support work for each user who desiring any support to an appropriate support member, to act as intermediary between the user and the support the support staff, thereby the present system may provide more suitable educational service in real time.

**Table 1**

| Name of Educational support member | Specialized field in which one can respond or provide any services | Contact address | Status whether or not one can instantly provide any supports to users |
|---|---|---|---|
| Smith, E | Chemistry for basic level, for medium level | IP address : yyy.yyy.yyy.yyy | Yes |
| Russell, T | Computer for basic level | Phone number: xxxx-xxxx-xxxx | No |

There are various techniques applicable for evaluating the answer from each user in the evaluating means 130. For instance, if the test is a multiple choice examination and the answer to the test is a series of marks, the present system determines whether or not that each answer is correct by comparing each mark in the answer from the user with that of a correct answer list. Alternatively, when the test is an essay examination and the answer to the test is an essay or a report, the present system determines whether or not said answer or report include predetermined one or more keywords expressing comprehension or achievements of the user with respect to the educational material i.e., the provided educational service and determine how may keyword in the essay, to evaluate comprehension of the user based on both the keywords and a criteria including a marks allocation of said keywords. Furthermore, the present system may determines whether or not there are one or more subkeywords expressing the respective keywords in the vicinity of the respective keywords (e.g. "vicinity" means an area within the sentence, stage or paragraph including the keywords, or an area within the predetermined number of words, phrases or sentences) to evaluate comprehension of the user based on a number of the founded subkeywords and/or a criteria of a marks allocation of said subkeywords (e.g. the marks allocation is varied based upon a predetermined level of importance of the respective subkeywords and/or a location of the respective subkeywords (i.e. by figuring out the distance from the keyword to the subkeyword)).

There are various techniques applicable for optimizing the educational material using predetermined selection criteria in the educational material optimizing means 150. For instance, a following table is prepared for the selection criteria and the table defines each educational level for each educational element within the educational material. When there is a mismatch between the evaluated user level and the educational level of the educational material in which the user is taking lectures, the present system dynamically changes some educational elements of the educational material to provide more suitable educational service using the updated elements to be included in the educational material, which updated elements are more suitable for the user.

**Table 2**

| Educational element title: Element type | Target educational level |
|---|---|
| Chemistry for beginner level: Document C1 | C |
| Chemistry for beginner level: Document C2 | C |
| Chemistry for beginner level: Document C3 | C |
| English for advanced level: Video picture E1 | A |
| English for medium level: Document E2 | B |

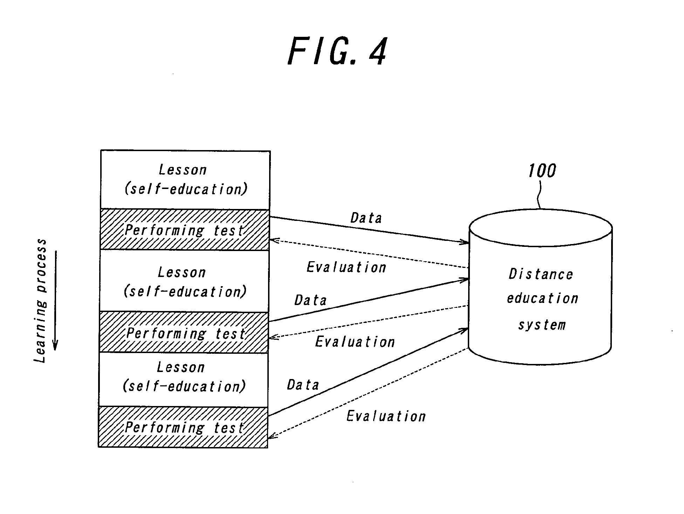

Fig. 4 is a concept diagram depicting a learning process provided by a distance education system according to the present invention. As shown in Fig. 4, a user is instructed to take a test, the present system then receives an answer to the test (for example, the answer is a series of marks or characters for multiple choice examination, or an essay for an essay test) and evaluates in real time and then immediately transmits the evaluation result to the user. Then the present system dynamically modify the contents of lessons in which a part of lessons is not yet finished/taken by the user and the present system can provide the educational services (i.e., lectures) more adapted to the particular user. Namely the present system periodically evaluates and attain an understanding of each user while attending lectures and dynamically modifies the educational material i.e., educational service based upon the evaluation result and consequently each user can receive the optimized educational service. Here, educational materials to be provided by the present system include various educational elements such as a text, a still image, a motion picture, or a sound.

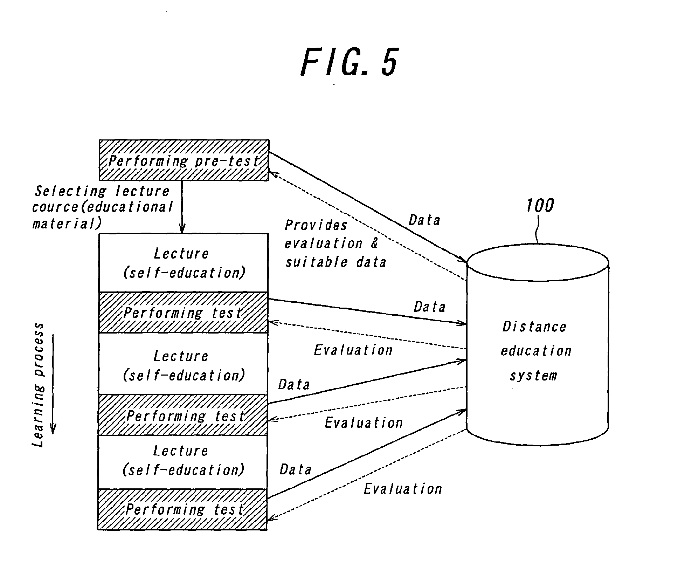

Fig. 5 is a concept diagram illustrating a learning process provided by an embodiment of the distance education system according to the present invention. As shown in Fig. 5, prior to receiving an educational service, a user is instructed to take a pre-examination and the present system lets the user to send answer sheet information to the system and then receives and evaluates it to select an educational material more suitable to that user.

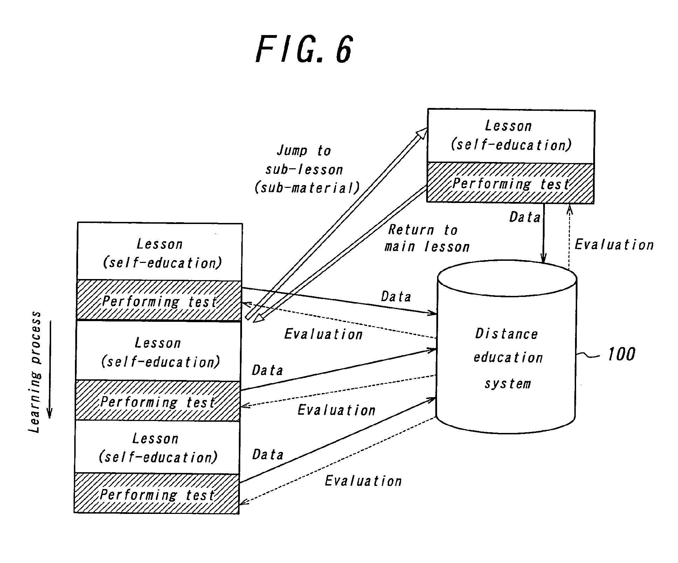

Fig. 6 is a concept diagram showing a learning process provided by another embodiment of the distance education system according to the present invention. As shown in Fig. 6, if it is desirable to provide another educational material such as a sub educational material to a user in response to the evaluation result of the reply containing the answer information from the user, the present system may provide a sub educational material to the user. After finishing the sub educational material by the user, the present system provide the main educational material to the user, thereby the present system may provide educational services by dynamically changing the educational material to be provided, to improve the understanding of each user.

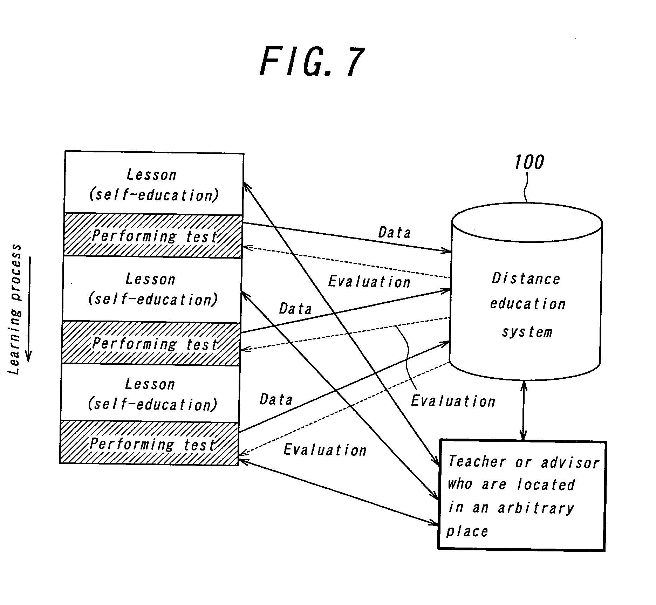

Fig. 7 is a concept diagram representing a learning process provided by still another embodiment of the distance education system according to the present invention. As shown in Fig. 7, the present system mediates communications between each user and an educational support person such as an instructor or an advisor who are located in an arbitrary place, the present system may instruct the support staff to complement the lecture for each user and give each user advise about learning problems in response to each support request from each user.

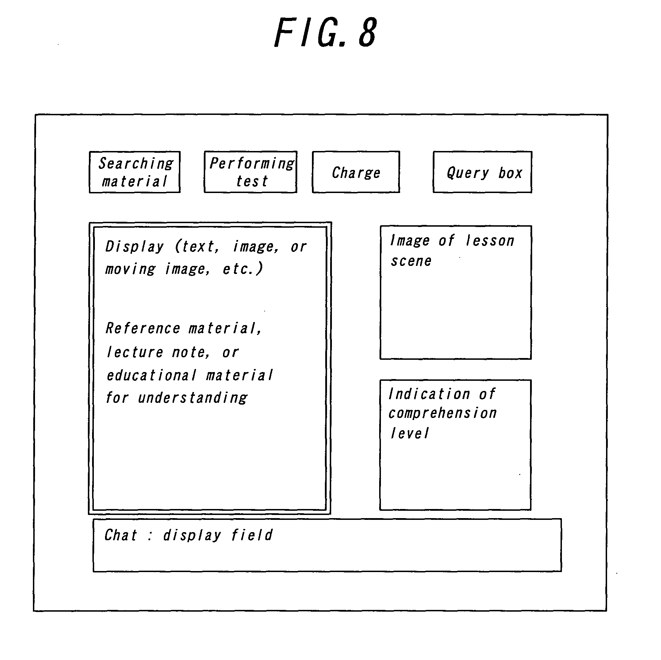

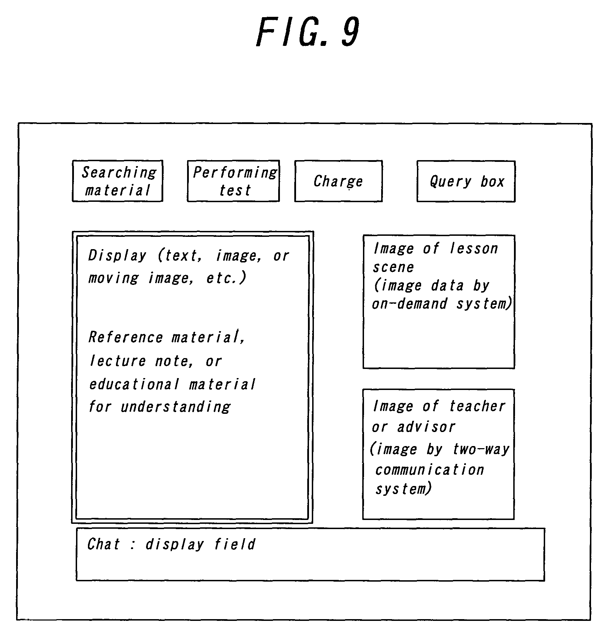

Fig. 8 is an exemplary screen interface for displaying information to a user provided by the distance education system according to the present invention and Fig. 9 is another exemplary screen interface for displaying information to a user provided by the distance education system according to the present invention. As shown in Figs. 8 and 9, a user takes a lecture i.e., educational service provided from the present system via a screen interface displayed on a user terminal (e.g., a PC, a TV set, or a personal digital assistance). The screen interface comprises a searching educational material box, a taking test box, a tuition fee box, a query box, a main section, in which texts, images, moving pictures and the like included in the material are to be displayed, sub screen sections, and fields for chatting. One of the sub screen sections can be used for playing back a videotape of a lesson scene and for indicating a comprehension level of a user, and for displaying an image of an educational support person, or an instructor in real time. Each user can, if needed, utilizes these sub screen sections to access other image data, for example, containing an image of lesson scene or experiment scene using other material (e.g., a sub educational material) in on demand system. Alternatively, each user can receive educational supports such that the user directly sends a question using a video camera via a network to an educational support member. In addition, a user and an educational support member can communicate each other using a video camera, a microphone and speaker, or an inputting device and the screen interface. For example, communication between a user and a support member is realized through only voices or characters such as a chatting. In the present distance education system according to the present invention, it is possible that a tutorial fee may be charged for any educational support to a user by an educational support member and the fee van be determined by each educational material or each support member, or by hourly charge, and the charge information may be displayed in the charge box of the screen interface.

While the present invention has been described with respect to some embodiments and drawings, it is to be understood that the present invention is not limited to the above-described embodiments, and modifications and drawings, various changes and modifications may be made therein, and all such changes and modifications are considered to fall within the scope of the invention as defined by the appended claims.

## Claims

1. A distance education system for providing an educational service to a user via a network, comprising:
education providing means for providing the educational service utilizing at least one educational material to the user via the network, wherein the educational material includes a plurality of elements;
test transmission means for transmitting a test to the user by each predetermined stage and for prompting the user to send an answer to the test, wherein said test is associated with said educational material;
evaluation means for receiving the answer from the user via the network to evaluate it; and
evaluation transmission means for transmitting the evaluation result by the evaluation means to the user.

2. The system according to claim 1, further comprising:
educational material optimizing means for selecting at least one element from a educational material database based upon the evaluation result by the evaluation means with reference to predetermined selection criteria; and
educational material dynamic changing means for dynamically changing a part of said educational material using said selected at least one element, wherein the part corresponds to the selected element and is not yet taken by the user.

3. The system according to claim 1, further comprising means for transmitting a pre-test prior to transmitting the educational material and for prompting the user to send an answer to the pre-test,
wherein said evaluation means further receives the answer to the pre-test to evaluate it,
and wherein said educational material optimizing means selects the educational material including a plurality of elements from the pre-established educational material database based upon the evaluation result of the pre-test with reference to said predetermined selection criteria.

4. The system according to claim 3, wherein said optimizing means selects the educational material from the pre-established educational material database based upon at least one of: the evaluation result of the answer to the pre-test; a request of the user; a history of taking lectures of the user; and past evaluation result of the user.

5. The system according to claim 1, further comprising:
an educational support member database in which educational support members, specializations areas of respective educational support members, and contact addresses of respective educational support members are recoded therein;
support member selection means for receiving support request form the user via the network and for selecting at least one educational support member who has a specialization field coinciding with a specialization fields of said support request received from the user via the network or a specialization field in which the educational service is provided to the user from said educational support member database; and
connection agent means for mediating a connection between said contact address of the selected educational support member and said user via the network and for communicating at least one piece of information from audio information, image information, and text information between the selected educational support member and the user.

6. The system according to claim 1, further comprising:
an educational support member database, in which educational support members, specializations areas of the respective educational support members, and contact addresses of respective educational support members are recoded therein;
support member selection means for receiving support request form the user via the network and for selecting at least one educational support member who has a specialization field coinciding with a specialization fields of said support request received from the user via the network or a specialization field in which the educational service is provided to the user from said educational support member database;
support request transmission means for transmitting said support request to the contact address of the selected educational support member via the network and for prompting the educational support member to reply it; and
user support means for receiving the reply of the support request from the selected educational support member via the network and for forwarding it to the corresponding user via the network.

7. The system according to claim 5 or 6, further comprising register means for registering status of the educational support members, in which each support member is whether or not readily respond to the support request, to the educational support member database,
and wherein said support selection means, when an educational support member is to be selected, for preferentially selecting the educational support member who has a status in which a member can readily respond.
